# EUROPEAN PATENT SPECIFICATION

(11) **EP 4 427 157 B1**
(45) Date of publication and mention of the grant of the patent: **02.12.2026**
(21) Application number: 22809075.9
(22) Date of filing: 25.10.2022
(51) Int. Cl.: G06F 21/57

(54) **COMPLIANCE RISK MANAGEMENT FOR DATA IN COMPUTING SYSTEMS**
COMPLIANCE-RISIKOMANAGEMENT FÜR DATEN IN COMPUTERSYSTEMEN
GESTION DE RISQUE DE CONFORMITÉ POUR DES DONNÉES DANS DES SYSTÈMES INFORMATIQUES

(30) Priority: 04.11.2021 US 202117453495
(43) Date of publication of application: 11.09.2024
(73) Proprietor: International Business Machines Corporation, Armonk, New York 10504 (US)
(72) Inventor: VETSCH, Pascal, SAN JOSE, California 95120-6099 (US); ROONEY, John, G, 8803 ZURICH (CH); GARCÉS ERICE, Luis, 8803 ZURICH (CH)
(74) Representative: IBM United Kingdom Limited
(86) International application number: PCT/EP2022/079686
(87) International publication number: WO 2023/078723

(56) References cited:
- US-A1- 2017 286 690
- US-A1- 2018 144 138

## Description

### BACKGROUND

The present invention relates generally to compliance risk management for data in computing systems. Computer-implemented methods are provided for managing compliance risk for data in computing systems, together with apparatus and computer program products implementing such methods.

Typically, computing systems must comply with various internally and externally defined standards. For example, to comply with essential security and regulatory requirements, systems must implement security measures against unauthorized system access and satisfy legal requirements relating to protection and privacy of data in the system. Various compliance assessment applications can be deployed to assess performance of system components (e.g., applications, storage systems, virtual machines, hypervisors, etc.) in relation to the relevant requirements. The compliance assessment shows which components are at risk of breaching the standards applicable to the system.

Conventional compliance assessments focus on individual system components. For example, some compliance assessment services allow users to identify resources at risk in a cloud-based system, where the resource types here are system components and cloud services. This compliance service runs various checks, calculates a compliance score, and displays the result for the checked resource. Another example is the Openshift Compliance Operator application developed by Red Hat Incorporated. This application can check the compliance state of the OpenShift platform and the underlying infrastructure and calculate compliance scores for both.

To ensure that computing systems operate securely and properly protect their data assets, improved techniques are required for ensuring compliance, especially with regard to managing compliance risks for data in these systems. United States Patent Application publication number US 2017/286690 A1, Chari, S. N. et al (" Automatic Generation of Data-Centric Attack Graphs", 5 October 2017) discloses generating an attack graph. A set of sensitive data corresponding to a regulated service is identified. A set of components corresponding to the regulated service that are authorized to perform activities associated with sensitive data is scanned for. Vulnerability and risk metrics corresponding to each component in the set of components of the regulated service is identified. The attack graph that includes nodes representing components in the set of components of the regulated service and edges between nodes representing relationships between related components in the set of components is generated based on the vulnerability and risk metrics corresponding to each component in the set of components. United States Patent Application publication number US 2018/144138 A1, Zhang Zhidong ("Data Security and Risk Ranking Tool", 2 May 2018) discloses a risk ranking tool including a retrieval engine, a data risk engine, an operational risk engine, and a data security engine. The data risk engine calculates, using graph data, a plurality of calculated data risk scores that each indicate an amount of data risk for nodes of the graph data. The operational risk engine calculates, using the graph data, a plurality of calculated operational risk scores that each indicate an amount of operational risk for nodes of the graph data. The data security engine determines whether any of the calculated data or operational risk scores equal or exceed a predefined score, and in response, initiates a security action related to the calculated risk score that exceeds the predefined score.

### SUMMARY

One aspect of the present invention provides a computer-implemented method according to claim 1.

According to another aspect of the invention, there is provided a computer system according to claim 11.

According to another aspect, there is provided a computer program product according to claim 13.

The invention is defined by the appended claims.

Embodiments of the invention will be described in more detail below, by way of illustrative and non-limiting example, with reference to the accompanying drawings.

### BRIEF DESCRIPTION OF THE DRAWINGS

Figure 1 is a schematic representation of computing apparatus for implementing methods, in accordance with an embodiment of the present invention;
Figure 2 illustrates component modules of an exemplary computing apparatus for managing data compliance risk in a computing system, in accordance with an embodiment of the present invention;
Figure 3 indicates steps of a compliance management process performed by the Figure 2 apparatus, in accordance with an embodiment of the present invention;
Figure 4 is a schematic illustrating dependencies between components of a computing system, in accordance with an embodiment of the present invention;
Figure 5 shows steps involved in calculating stack-dependent compliance scores in Figure 3, in accordance with an embodiment of the present invention;
Figure 6 is a schematic illustration of a system graph generated by the Figure 2 apparatus, in accordance with an embodiment of the present invention;
Figure 7 indicates steps performed by a system analyzer in a preferred embodiment of the apparatus, in accordance with an embodiment of the present invention;
Figure 8 indicates further steps, in accordance with an embodiment of the present invention
Figure 9 illustrates calculation of stack-dependent compliance scores in an implementation of the Figure 8 process, in accordance with an embodiment of the present invention; and
Figure 10 indicates steps of a dynamic update process, in accordance with an embodiment of the present invention.

### DETAILED DESCRIPTION

Embodiments of the invention allow compliance risks to data in computing systems to be managed in a manner which accounts for the various interdependencies between datasets and individual components of a system. The components of a typical computing system do not operate independently. Each component is generally reliant on one or more other components with which that component interacts in some way. Applications are dependent on underlying platforms and infrastructure, virtual machines are dependent on hypervisors, hypervisors and operating systems are dependent on underlying hardware resources, and so on. A dataset which is processed by a particular application, or stored on a particular storage system, is therefore dependent on a stack of hierarchically dependent system components, each of which depends on another in order of the hierarchy down through the stack. Any given dataset can depend on one or more such stacks, and overall interdependency of datasets and components can be complex in many computing environments.

By focusing on compliance of individual components, prior compliance assessment techniques neglect the important effect of these dependencies. A non-compliant component will have no effect on compliance of surrounding components, e.g., if a storage system is non-compliant, this will have no compliance impact on a database service which stores data on the storage system. In reality, there can be a substantial impact due to system dependencies. Methods embodying the invention accommodate this impact by generating a specialized data structure in the form of a graph representing dependencies in a system, and then use this graph to calculate a stack-dependent compliance score for each dataset in the system. An alert is generated if the resulting score indicates a compliance risk, allowing action to be taken to mitigate this risk. By accommodating dependency between data and components and between stacked components in a system, the stack-dependent compliance scores quantify the true risk to data assets. These scores provide a complete assertion about the compliance posture of the whole system, enabling action to be taken as necessary to ensure data that is protected. Methods embodying the invention thus significantly improve compliance management of computing systems, offering improved systems with better protection of data assets.

An alert generated for a dataset may be output to an operator for appropriate action to be taken. In addition, or as an alternative, preferred methods include, in response to an alert for a dataset, initiating an action in the system to mitigate the compliance risk for that dataset. Such an action may comprise one or more operations such as: restricting access permissions in the system for the dataset; deleting the dataset; isolating a system component storing the dataset; and reconfiguring a stack of system components on which the dataset is dependent. Selection of appropriate actions may be based on predefined rules which can accommodate various parameters, such as data classification (confidential, public, personal, etc.), degree of risk, and source of non-compliance based on the contributing compliance scores for components. This allows essential action to be taken as necessary, without waiting for operator intervention, to protect system data.

The stack-dependent compliance score for a dataset may be calculated as a function of the compliance scores for the aforementioned set of nodes and a predefined maximum compliance score for the dataset. When calculating the stack-dependent score for a dataset, the embodiments identify the aforementioned set of nodes by traversing directed edges from the node corresponding to that dataset up to a predetermined maximum depth in the graph. This both simplifies processing and overcomes the problem that dependency paths can be circular in system graphs for complex environments The embodiments designate certain dependencies as critical for determining compliance risk. In particular, for any edge in the system graph representing one of a predefined set of dependency types, that edge can be identified as a "priority edge" which must be traversed in identifying the set of nodes for computation of the stack-dependent score for a dataset. In the embodiments, the set of nodes is determined by traversing directed edges from the node corresponding to the dataset up to a predetermined maximum depth in the graph, subject to always traversing any priority edge between nodes corresponding to components in the stack(s) for the dataset. This ensures that edges representing critical dependencies, which can severely affect data compliance, are always traversed.

The embodiments accommodate different types of dependency between components by defining a weight for each edge of the graph in dependence on a type of dependency represented by that edge. These methods calculate an impact score for each node in the aforementioned set as a function of the compliance score for that node and the weight of the directed edge traversed to reach that node. The stack-dependent compliance score for the dataset is then calculated as a function of the impact scores for nodes in the set. This allows the contributions of nodes to stack-dependent scores to be tuned according to different degrees of dependency in the system.

Advantageously, generation of the system graph can be based on standard metadata which is automatically acquired from the computing system. In particular, embodiments may access at least one system inventory provided in the computing system to obtain system metadata indicating configuration of system components, and access at least one data catalog provided in the computing system to obtain data metadata indicating location and usage of each dataset in the system. These methods can then identify the stack(s) of system components for each dataset from the system metadata and data metadata. Similarly, preferred methods include communicating with at least one compliance application provided in the computing system to obtain the compliance scores for nodes of the graph. Moreover, preferred methods can dynamically update the system graph in response to detection of events in the system. Events here may comprise: addition of a dataset; deletion of a dataset; a change to a stack of system components for a dataset; and a change in the compliance score for a node of the graph. These methods can then calculate a new stack-dependent compliance score for (at least) each dataset affected by an event. This provides an adaptive process which can accommodate changes during system operation, reevaluating compliance scores to ensure that all data is protected appropriately.

Some embodiments may also calculate stack-dependent compliance scores for nodes representing system components. This and other features and advantages of methods embodying the invention are described in more detail below.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Embodiments to be described can be performed as computer-implemented methods for managing compliance risk for data in a computing system. Such methods may be implemented by computing apparatus comprising one or more general- or special-purpose computers, each of which may comprise one or more (real or virtual) machines, providing functionality for implementing operations described herein. Steps of methods embodying the invention may be implemented by program instructions, e.g. program modules, implemented by a processing apparatus of the system. Generally, program modules may include routines, programs, objects, components, logic, data structures, and so on that perform particular tasks or implement particular abstract data types. The computing system may be implemented in a distributed computing environment, such as a cloud computing environment, where tasks are performed by remote processing devices that are linked through a communications network. In a distributed computing environment, program modules may be located in both local and remote computer system storage media including memory storage devices.

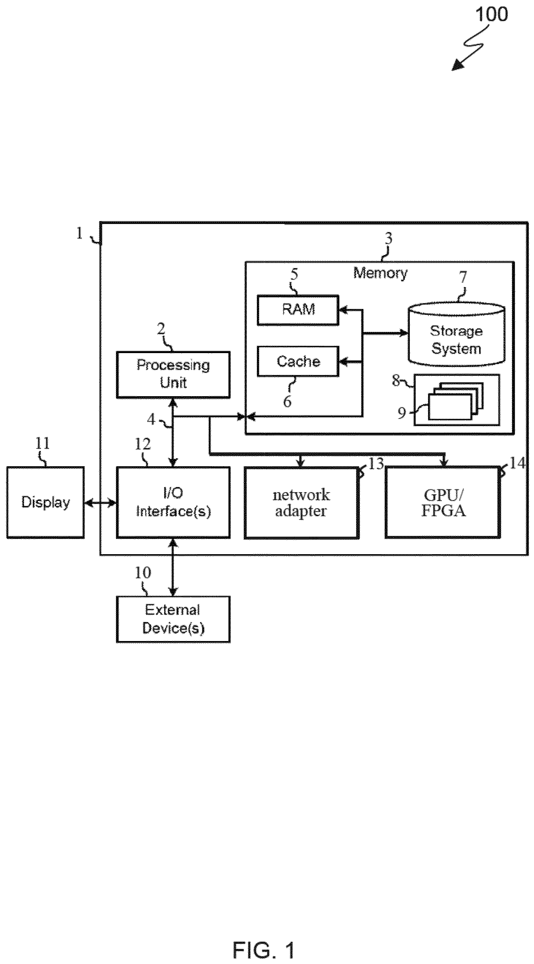

Figure 1 is a block diagram 100 of exemplary computing apparatus for implementing methods embodying the invention. The computing apparatus is shown in the form of a general-purpose computer 1. The components of computer 1 may include processing apparatus such as one or more processors represented by processing unit 2, a system memory 3, and a bus 4 that couples various system components including system memory 3 to processing unit 2.

Bus 4 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computer 1 typically includes a variety of computer readable media. Such media may be any available media that is accessible by computer 1 including volatile and non-volatile media, and removable and non-removable media. For example, system memory 3 can include computer readable media in the form of volatile memory, such as random access memory (RAM) 5 and/or cache memory 6. Computer 1 may further include other removable/non-removable, volatile/non-volatile computer system storage media. By way of example only, storage system 7 can be provided for reading from and writing to a non-removable, non-volatile magnetic medium (commonly called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can also be provided. In such instances, each can be connected to bus 4 by one or more data media interfaces.

Memory 3 may include at least one program product having one or more program modules that are configured to carry out functions of embodiments of the invention. By way of example, program/utility 8, having a set (at least one) of program modules 9, may be stored in memory 3, as well as an operating system, one or more application programs, other program modules, and program data. Each of the operating system, one or more application programs, other program modules, and program data, or some combination thereof, may include an implementation of a networking environment. Program modules 9 generally carry out the functions and/or methodologies of embodiments of the invention as described herein.

Computer 1 may also communicate with: one or more external devices 10 such as a keyboard, a pointing device, a display 11, etc.; one or more devices that enable a user to interact with computer 1; and/or any devices (e.g., network card, modem, etc.) that enable computer 1 to communicate with one or more other computing devices. Such communication can occur via Input/Output (I/O) interfaces 12. Also, computer 1 can communicate with one or more networks such as a local area network (LAN), a general wide area network (WAN), and/or a public network (e.g., the Internet) via network adapter 13. As depicted, network adapter 13 communicates with the other components of computer 1 via bus 4. Computer 1 may also communicate with additional processing apparatus 14, such as a GPU (graphics processing unit) or FPGA, for implementing embodiments of the invention. It should be understood that although not shown, other hardware and/or software components could be used in conjunction with computer 1. Examples include, but are not limited to: microcode, device drivers, redundant processing units, external disk drive arrays, RAID systems, tape drives, and data archival storage systems, etc.

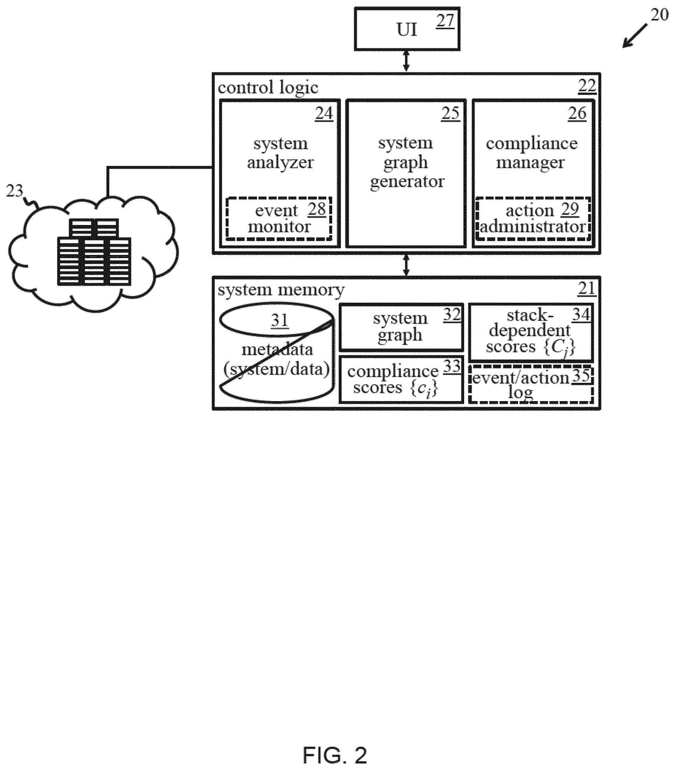

The Figure 2 schematic illustrates component modules of an exemplary computing apparatus for managing data compliance risks in a computing system. The apparatus 20 comprises memory 21 and control logic, indicated generally at 22, comprising functionality for managing compliance risk for data in a computing system, here a datacenter 23. The control logic 22 comprises a system analyzer 24, a system graph generator 25, and a compliance manager 26. Each of these logic modules comprises functionality for implementing particular steps of a compliance management process detailed below. During this process, logic modules may communicate with a system operator via a user interface (UI) 27, displayed at a user computer, for user interactions with the system. In preferred embodiments below, the system analyzer 24 includes an event monitor module 28, and compliance manager 26 includes an action administrator module 29, as indicated by dashed lines in the figure.

Logic modules 24 through 26 interface with memory 21 which stores various data structures used in operation of apparatus 20. These data structures include a set of metadata 31 for the system 23 to be managed, a system graph 32 produced by graph generator 25 in operation, a set of compliance scores 33, denoted by {cᵢ}, i = 1, 2, 3, ..., which are associated with respective nodes nᵢ of the system graph 32, and a set of stack-dependent compliance scores 34, denoted by {Cⱼ}, j = 1, 2, 3, ..., which are generated by compliance manager 26 for respective datasets dⱼ in system 23. Memory 21 may also store a log 35 recording system events and administrative actions implemented by the apparatus in preferred embodiments below.

Apparatus 20 may be local or remote from the computing system 23 to be managed, and may be integrated in the system in some embodiments. In general, functionality of logic modules 24 through 26 may be implemented by software (e.g., program modules) or hardware or a combination thereof. Functionality described may be allocated differently between system modules in other embodiments, and functionality of one or more modules may be combined. The various components of apparatus 20 may be provided in one or more computers of a computing system. For example, all modules may be provided in a computer 1 at which UI 27 is displayed to an operator, or modules may be provided in one or more computers/servers to which user computers can connect via a network for interaction with the apparatus via a UI 27. Such a network may in general comprise one or more component networks and/or internetworks, including the Internet. System memory 21 may be implemented by one or memory/storage components associated with one or more computers implementing apparatus 20.

The compliance management process in apparatus 20 uses the metadata 31 which is prestored in memory 21 for the system 23 to be managed. This metadata comprises both system metadata and data metadata. The system metadata identifies the various system components and indicates how the components are configured in the system. For example, a typical datacenter comprises a network of multiple computers/servers which may be clustered within the datacenter network, along with storage systems (solid-state drives, optical storage devices, tape storage systems etc.,) and network devices (routers, switches, network controllers, etc). Any given server may support one or more operating systems/platforms, with hypervisors running one or more virtual machines, which in turn run one or more applications/services (possibly within one or more containers) in the system. Depending on the type and configuration of the system managed, system components may therefore comprise applications, services, operating systems, platforms, virtual machines, hypervisors, containers, storage systems, physical machines, network devices, networks, network clusters, datacenters, clusters of datacenters, and so on. The data metadata indicates where each dataset is stored and processed in the system. Various other metadata may be associated with system datasets. For example, data is typically classified according to degree of sensitivity, e.g. public, personal, confidential, etc., with more sensitive data having a higher classification, and this data classification will be included in the metadata for a dataset. In some embodiments, the metadata 31 may be defined by operator input via UI 27, e.g. for simple systems with relatively few resources. In preferred embodiments, however, the metadata 31 can be obtained automatically by scanning system 23 as explained below.

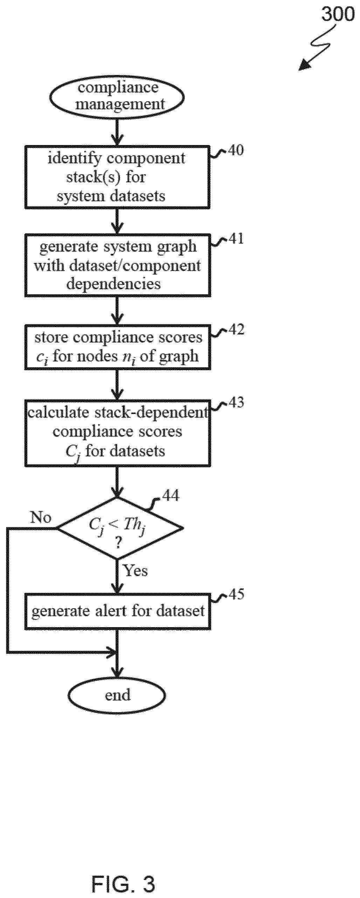

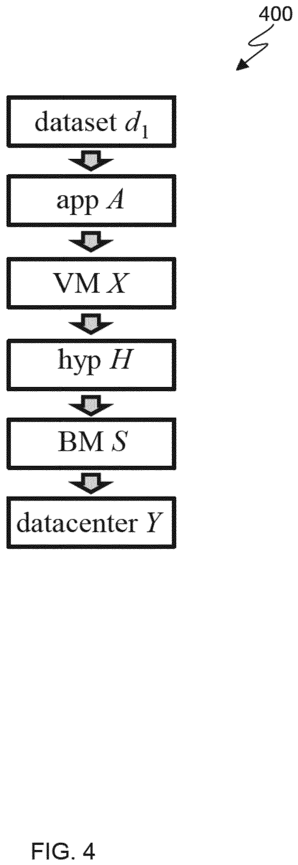

Figure 3 depicts a flowchart 300 which indicates basic steps of the compliance management process in apparatus 20. In step 40, the system analyzer 24 processes the metadata 31 to identify, for each dataset dⱼ in system 23, one or more stacks of hierarchically-dependent system components on which that dataset is dependent. Figure 4 shows one example (e.g., example stack 400) of such a stack. Here, a dataset d₁ is processed by an application (app) A which runs on a virtual machine (VM) X. The VM runs on a hypervisor (hyp) H which in turn runs on a bare-metal server (BM) S located in a datacenter Y. The dataset d₁ is thus dependent on the stack of components from app A down to datacenter Y, where each component depends on the next in hierarchy order down through the stack. In a typical computing system 23, any given dataset may depend on one or more such stacks of components, e.g., where the dataset is processed by multiple applications. The system analyzer 24 passes data defining the components stacks for each dataset dⱼ to system graph generator 25.

In step 41, the graph generator 25 generates a system graph, having nodes (vertices) interconnected by directed edges, representing components and dependencies in system 23. Each dataset dⱼ, and each component in each stack for that dataset, is represented by a corresponding node of the graph. Edges represent the dependencies in the system. Hence, dependency of each dataset on a stack, and between successive components in each stack, is represented by a directed edge between the relevant nodes of the graph. Data defining the resulting system graph is stored at 32 in system memory 21.

Step 42 of Figure 3 represents storage in system memory 21 of the compliance scores 33 for system components which are assigned to the corresponding nodes nᵢ of system graph 32. The compliance score cᵢ for a node nᵢ is an individual compliance score relating to the corresponding system component as determined by conventional compliance applications/services for system 23. These compliance scores may be input by an operator in some embodiments, or may be obtained automatically from the system as described below. The compliance scores cᵢ for nodes can be stored as associated properties, or labels, for respective nodes nᵢ in system graph 32.

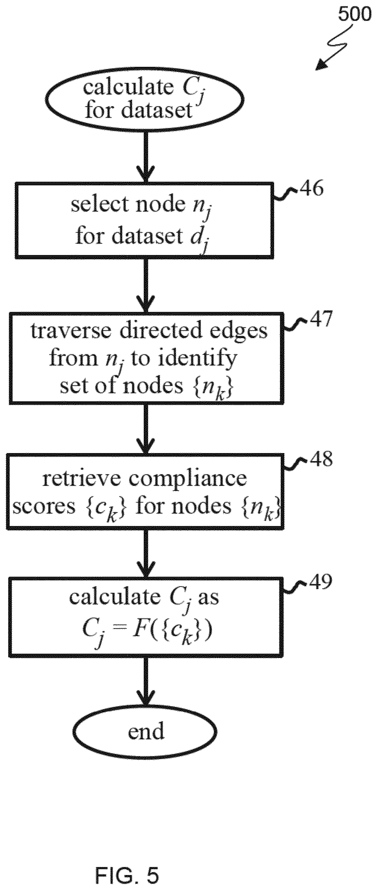

In step 43, when the system graph has been fully populated, the compliance manager 26 processes the graph to calculate a stack-dependent compliance score for each dataset dⱼ in the system. This process is shown in more detail in Figure 5 (e.g., flowchart 500). In step 46 here, the compliance manager selects the node nⱼ in system graph 32 corresponding to a dataset dⱼ. In step 47, the compliance manager traverses directed edges in the graph from the node nⱼ to identify a set of nodes, denoted by {nₖ}, reachable by traversing edges from nⱼ in the graph. This search may identify all nodes reachable from dataset node nⱼ or may be subject to various constraints described below. In step 48, the compliance manager retrieves the compliance scores {cₖ} for the resulting node set {nₖ}. In step 49, the stack-dependent compliance score Cⱼ is calculated as a function, denoted here by F, of the compliance scores {cₖ}. For example, in simple embodiments the function F comprises a monotonically increasing function of the compliance score for each node in {nₖ}, whereby a higher individual score for a node results in a higher stack-dependent score. If a compliance score is not available for a node nₖ then this score is simply omitted from the calculation.

Returning to Figure 3, in decision step 44 the compliance manager checks if the stack-dependent score Cⱼ breaches a predetermined risk threshold Thⱼ for that dataset, signifying that data is at risk. The risk threshold Thⱼ may be predefined by operator input or may be calculated automatically as explained below. Assuming here that higher compliance scores indicate better compliance, step 44 checks whether Cⱼ is below the threshold Thⱼ for the dataset. If so, the risk threshold is breached and, in step 45, the compliance manager generates an alert for the dataset. This alert may be output to an operator via UI 27 for appropriate action to be taken and/or may prompt further action by compliance manager 26 as described below.

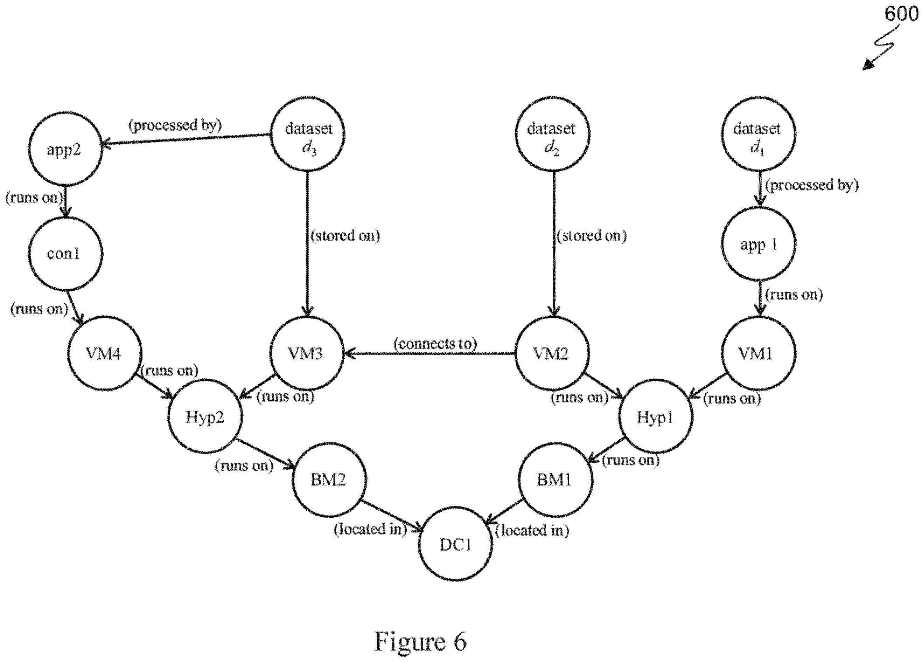

Figure 6 illustrates a portion of a system graph (e.g., graph 600) showing dependencies for three datasets in a computing system 23. Dependency types are indicated in brackets for the various edges. Here, dataset d₁ depends on one component stack which corresponds to that shown in Figure 4. Dataset d₂ depends on two stacks via virtual machine VM2 which runs on hypervisor Hyp1 and also connects to virtual machine VM3. Dataset d₃ also depends on two stacks, one via VM3 which runs on hypervisor Hyp2, and another via application app2 which runs in application container con1 running on VM4 and Hyp2. In step 47 of Figure 3, if the node set {nₖ} contains all nodes reachable from the dataset node dⱼ, the compliance scores of all nodes in all stacks for dⱼ will be accommodated in the stack-dependent score, giving a "full-stack" compliance score Cⱼ for each dataset.

It will be seen that the above process accommodates the fact that relations between nodes of the system graph are transitive. For example, if a virtual machine runs on a non-compliant hypervisor, compliance of applications running on that virtual machine will also be compromised. By representing the complete computing system 23 with its compliance information, dependencies, and data assets in a directed graph, the compliance management process addresses the hidden compliance impact between dependent components and datasets to quantify the true risk to data, whereby action can be taken to ensure that data is properly protected.

Operation of a preferred embodiment of apparatus 20 will now be described in more detail. In this embodiment, the system analyzer 24 is adapted to scan computing system 23 to obtain the metadata required for the compliance management process. The entire system 23 may be scanned here, or a scope for this scan may be defined by operator input via UI 27, e.g., for system resources used by a particular user (e.g., a particular company) in a system 23 supporting multiple user accounts.

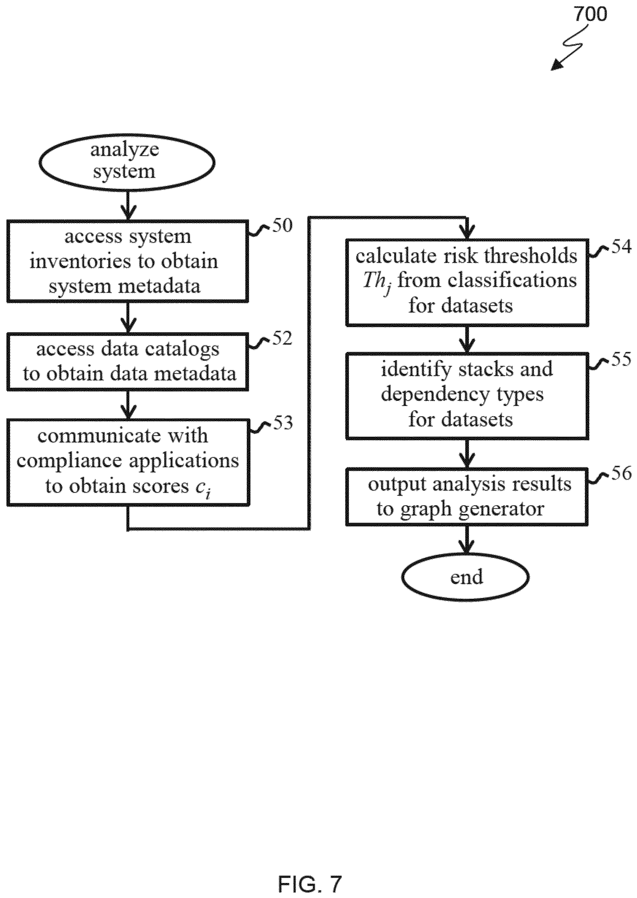

Figure 7 shows flowchart 700 which depicts steps performed by the system analyzer here. In step 50, the system analyzer accesses one or more system inventories maintained in system 23 to obtain system metadata, indicating configuration of system components, within the defined scope of the scan. Similarly, in step 52, the system analyzer accesses one or more data catalogs provided in system 23 to obtain data metadata, indicating storage location and usage of each dataset, i.e., what processes the data. In step 53, the system analyzer communicates with one or more compliance monitoring applications in system 23 to obtain the local compliance scores for system components, within the scope of the scan, which will be represented by nodes in the system graph. All relevant data for populating the system graph is thus obtained automatically by placing calls to the appropriate APIs (Application Programming Interfaces) in system 23.

Where the metadata obtained in step 52 for a dataset includes a data security/sensitivity classification, in step 54 the system analyzer calculates a risk threshold Thⱼ for the dataset as a function of the specified data classification, such that a higher risk threshold is defined for more sensitive data. In step 55, the system analyzer identifies the component stacks and dependencies for datasets generally as described above. Here, however, the system analyzer identifies the particular type of dependency between a pair of components. For example, dependency types may be those indicated in brackets in the system graph of Figure 6. The analysis results, i.e., the identified datasets and components, with their associated dependencies, dependency types, compliance scores and risk thresholds, are output to graph generator 25 in step 56. System analysis is then complete for the current scan.

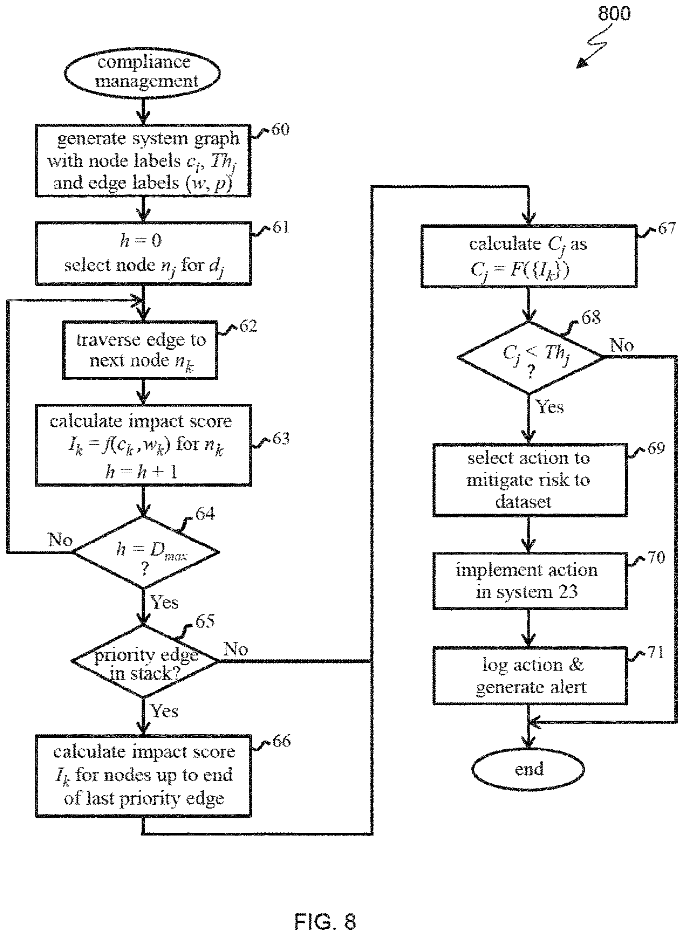

The ensuing compliance management process (e.g., flowchart 800) is shown in Figure 8. In step 60, graph generator 25 generates the system graph generally as described above. Component nodes are labeled with their local compliance scores cᵢ, and dataset nodes are labeled with their risk thresholds Thⱼ. In this embodiment, the graph generator also labels each edge with a weight w dependent on the type of dependency represented by that edge. The weights w reflect the relative importance of the various dependencies in terms of their potential impact on data compliance. For example, a VM running on a hypervisor is more tightly coupled than a VM connecting to another VM. Therefore, each type of edge is assigned a weight w between 0 (no compliance impact) and 1 (maximum compliance impact). By way of example, weights maybe assigned to the dependencies of Figure 6 as follows:

### Dependency type Weight

| | |
|---|---|
| runs on | 1 |
| stored on | 0.7 |
| processed by | 0.5 |
| connects to | 0.2 |
| located in | 0.2 |

In addition, graph generator 25 labels certain edges as "priority edges" by setting a priority label p to p =1. In particular, any edge representing one of a predefined set of dependency types is identified as a priority edge. This set of dependency types comprises critical dependencies which can severely affect data compliance. For example, an application which processes data can be heavily impacted by non-compliance of a VM running the application. The VM can in turn can be severely compromised by the underlying hypervisor. In the above list, therefore, any "runs on" edge is labeled as a priority edge. In this example, all other edge-types are labeled p = 0. However, other edge-types may be included in the priority set as deemed appropriate for a given system.

After generation of the system graph, steps 61 to 71 of Figure 8 are performed by compliance manager 26 for each dataset dⱼ in the system to be managed. In step 61, the corresponding dataset node nⱼ is located in the graph and a loop counter h is initialized to 0. Steps 62 to 66 are then performed for each directed edge leading from dataset node nⱼ. In step 62, the edge is traversed to the next node nₖ, and an impact score lₖ is calculated for the node nₖ in step 63. The impact score lₖ is calculated as a function f of the compliance score for nₖ and the weight (denoted by wₖ in the figure) of the directed edge traversed to reach that node. In this example, local compliance scores cᵢ are defined as a percentage, and lₖ is calculated as lₖ = wₖ(1 - cₖ /100), where cₖ is the compliance score for node nₖ. The loop counter h is then incremented and operation proceeds to step 64. This checks if h has reached a maximum hop-count Dₘₐₓ defining a maximum depth in the graph for the search. If not, operation reverts to step 62 for the next hop.

When h = Dₘₐₓ at step 64, operation proceeds to decision 65. Here the compliance manager checks for any priority edges (p = 1) in a path reachable from the current node nₖ, corresponding to priority dependencies lower in the stack. For any path with a priority edge here, the compliance manager calculates impact scores lₖ for all nodes nₖ in the path up to the end of the last priority edge. Operation then proceeds to step 67. If no paths with priority edges are detected at step 65, operation moves directly to step 67.

The stack-dependent score Cⱼ for the current dataset dⱼ is calculated in step 67 as a function of the impact scores computed for nodes in steps 63 and 66. The overall score Cⱼ for a dataset is thus dependent on the impact scores for a set of nodes reached by traversing directed edges from dataset node nⱼ up to the maximum depth Dₘₐₓ, subject to always traversing any priority edge between nodes corresponding to a pair of components in the component stack(s) for the dataset. In this example, the score Cⱼ is calculated as: *Cⱼ* = *cₘₐₓ*(Π*ₖ*(1 - *Iₖ*)), where *cₘₐₓ* is a predefined maximum compliance score for a dataset, e.g., *cₘₐₓ* = 100.

In step 68, the compliance manager checks if the stack-dependent score Cⱼ for the current dataset dⱼ breaches the risk threshold Thⱼ for dataset node nⱼ. If not, operation is complete for that dataset. However, if a risk is identified at step 68, the compliance manager initiates appropriate action to mitigate the risk. In step 69 here, the action administrator module 29 selects an appropriate action to protect the data. The action selected may involve one or more predefined actions such as: restricting access permissions in the system for the dataset; deleting the dataset; isolating a system component storing the dataset; and reconfiguring a stack of system components for the dataset. Action selection can be based on predefined rules in action administrator 29, where rules can accommodate various parameters such as data classification, degree of risk, and source of non-compliance based on the contributing compliance scores for components. For example, if a hypervisor is identified as a primary source of non-compliance, the VMs running on this hypervisor may be migrated to a different, more compliant hypervisor. Data may be isolated by shutting down a machine storing a dataset, or access permissions may be revoked for all but highest-clearance users. A highly classified dataset may be deleted if risk is deemed critical. In general, any administrative action may be implemented, subject to necessary access permissions in the system, to mitigate the risk and protect data appropriately. The selected action is implemented by action administrator 29 in step 70 of Figure 8. In step 71, the action is recorded in action log 35, and an alert is output to an operator for review.

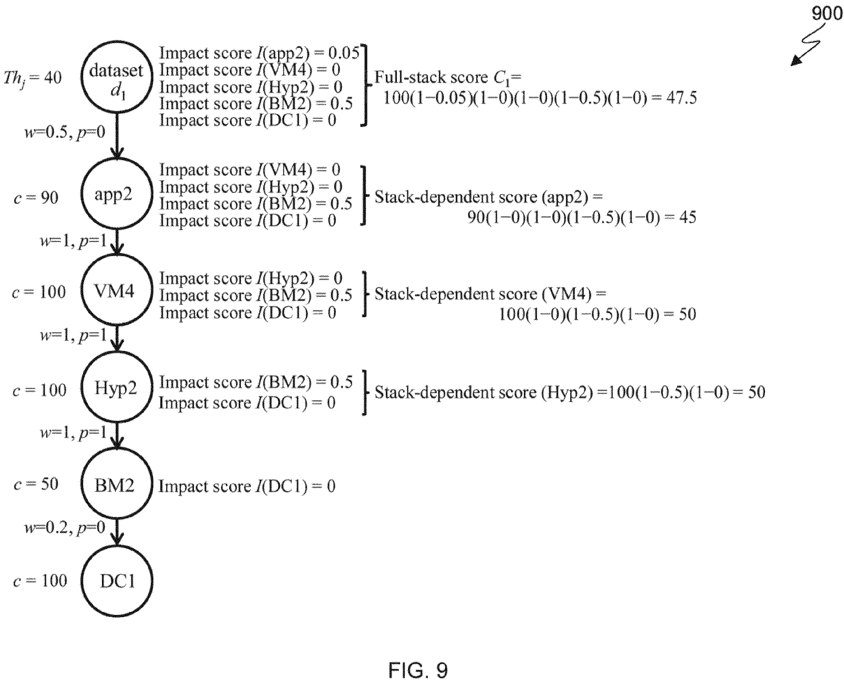

Figure 9 shows an example of the compliance score calculation for dataset d₁ (e.g., example 900) in the Figure 6 graph. This calculation assumes local compliance scores c and edge labels as shown in the figure, and a maximum depth Dₘₐₓ = 5. This accommodates the entire stack of dependencies for d₁, resulting in a full-stack compliance score of C₁ = 47.5. As illustrated in this figure, the compliance manager may also calculate stack-dependent compliance scores for each of a subset of nodes corresponding to system components in the stack. Here, stack-dependent compliance scores C are calculated for component nodes as *C* = *c*(Π*ₖ*(1 - *Iₖ*)), where c is the local compliance score for the node in question. Individual risk thresholds may be defined for the component nodes, and an alert can be generated and/or appropriate action taken if any stack-dependent score breaches a risk threshold. Alternatively, stack-dependent scores may be calculated for predetermined node types which are most likely to impact data compliance. This further mitigates risk to data by allowing correction of compliance risks lower in the stack where necessary.

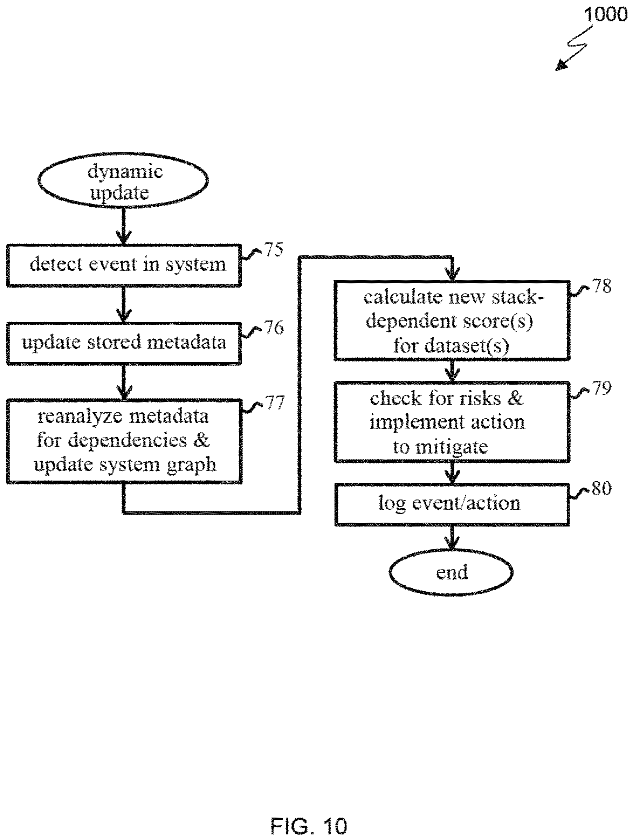

The management process of Figures 7 and 8 may be performed periodically during system operation, or as required for a given system user in a multi-user environment. In preferred embodiments, however, the event monitor 28 of system analyzer 24 is responsive to events in system 23 to trigger dynamic update of the system graph. This may be implemented by an event-driven metadata steaming system, whereby any updates to metadata in system 23 are streamed to event monitor 28. Figure 10 depicts flowchart 1000 that show illustrative steps for calculating new stack dependent scores and logging one or more events and/or actions. In step 75, the event monitor 28 detects a relevant event in the system by analyzing metadata updates received from the system. Events detected here may be: the addition of a dataset; deletion of a dataset; a change to a stack of system components for a dataset; and a change in the compliance score for a node of the graph. Another event may be a change to a data classification where this is used to determine the risk threshold for a dataset. Metadata 31 stored in system memory 21 is updated accordingly in step 76. In step 77, the system analyzer 24 reanalyzes the updated metadata, and the graph generator updates the system graph based on the analysis results. New stack-dependent scores are then calculated in step 78, at least for any dataset affected by a change in the system graph. In step 79, the compliance manager checks for compliance risks and initiates any necessary action as described above. The event/action is then recorded in log 35 in step 80. This dynamic update process further mitigates risk to data by ensuring that the system graph is always up-to-date.

It will be seen that the above embodiment incorporates the various dependencies between infrastructure components and data into a single system graph, accommodating local compliance states and data classifications, to quantify the true risk of data exposure and act to protect data as necessary. By accounting for system dependencies in this way, the management system addresses the real impact of compliance issues on data in complex environments. The techniques described are readily scalable to any type of computing system, whether a small localized system or a highly complex, enterprise-scale computing environment.

Various alternatives and modifications to the embodiments described can of course be envisaged. By way of example, system graphs may include nodes for components other than those shown in the figures as appropriate for a particular computing system. Other edge types may be defined as deemed appropriate for a particular system graph. The techniques described can be applied to one or more datasets in a computing system. Various other functions can also be envisaged for calculating the impact scores and stack-dependent compliance scores.

In general, where features are described herein with reference to a method embodying the invention, corresponding features may be provided in an apparatus/computer program product embodying the invention, and vice versa.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A computer-implemented method comprising:
for each dataset in a computing system, identifying (40) at least one stack of hierarchically-dependent system components on which that dataset is dependent;
generating (41) a system graph (32) having nodes interconnected by directed edges, wherein each dataset, and each component in each stack, is represented by a corresponding node of the graph and dependency of each dataset on a stack, and between successive components in each stack, is represented by a directed edge between nodes of the graph;
for any edge in the system graph representing one of a predefined set of dependency types, identifying that edge as a priority edge;
storing (42) compliance scores (33) for respective nodes corresponding to system components, the compliance score for a node relating to the corresponding system component;
for each dataset, calculating (43) a stack-dependent compliance score (34) based on potential impact on data compliance as a function of the compliance scores for a set of nodes reached by traversing directed edges in the graph from the node corresponding to that dataset, and identifying the set of nodes by traversing (47) directed edges from the node corresponding to that dataset up to a predetermined maximum depth in the graph, subject to always traversing any priority edge between nodes corresponding to components in the at least one stack for that dataset; and
generating (45) an alert if the stack-dependent compliance score for a dataset breaches a predetermined risk threshold for that dataset, wherein the step of calculating a stack-dependent compliance score comprises:
defining a weight for each edge of the graph in dependence on a type of dependency representeby that edge;
in calculating the stack-dependent compliance score (34) for each dataset, calculating (63) an impact score for each node in the set as a function of the compliance score for that node and the weight of the directed edge traversed to reach that node; and
calculating (66) the stack-dependent compliance score for that dataset as a function of the impact scores for nodes in the set.

2. The computer-implemented method of claim 1, wherein the stack-dependent compliance score (34) for a dataset is calculated as a function of the compliance scores for the set of nodes and a predefined maximum compliance score for the dataset.

3. The computer-implemented method of claim 1 or 2, further comprising:
in response to an alert for a dataset, initiating an action in the system to mitigate the compliance risk.

4. The computer-implemented method of claim 3, wherein the action comprises at least one of: restricting access permissions in the system for the dataset; deleting the dataset; isolating a system component storing that dataset; and reconfiguring the at least one stack of system components for that dataset.

5. The computer-implemented method of any preceding claim, wherein the stack-dependent compliance score (34) for each dataset comprises a monotonically increasing function of the compliance score for each node in the set of nodes for that dataset.

6. The computer-implemented method of any preceding claim, further comprising:
accessing at least one system inventory provided in the computing system to obtain system metadata indicating configuration of system components;
accessing at least one a data catalog provided in the computing system to obtain data metadata indicating location and usage of each dataset in the system; and
identifying the at least one stack of system components for each dataset from the system metadata and data metadata.

7. The computer-implemented method of claim 6, further comprising:
including determining the risk threshold for each dataset in dependence on a data classification included in the data metadata.

8. The computer-implemented method of any preceding claim, further comprising:
dynamically updating the system graph in response to detection of events in the system, the events comprising addition of a dataset, deletion of a dataset, a change to the at least one stack of system components for a dataset, and a change in the compliance score for a node of the graph; and
calculating a new stack-dependent compliance score (34) for each dataset affected by an event of the events.

9. The computer-implemented method of any preceding claim, wherein the system components comprise at least a subset of: applications; services; operating systems; platforms; virtual machines; hypervisors; containers; storage systems; physical machines; network devices; networks; network clusters; datacenters, and clusters of datacenters.

10. The computer-implemented method of any preceding claim, further comprising:
for each of a subset of nodes corresponding to system components:
calculating a stack-dependent compliance score (34) for that node as a function of the compliance score stored for that node and the compliance scores stored for a set of nodes reached by traversing directed edges in the graph from that node; and
generating (71) an alert if the stack-dependent compliance score for a component traverses a predetermined risk threshold for that component.

11. A computer system comprising:
one or more computer processors (2);
one or more computer readable storage media (3); and
program instructions stored on the one or more computer readable storage media for execution by at least one of the one or more computer processors, the program instructions comprising:
system analyzer (24) logic adapted, for each dataset in the system, to identify at least one stack of hierarchically-dependent system components on which that dataset is dependent;
graph generator (25) logic adapted to generate a system graph (32) having nodes interconnected by directed edges, wherein each dataset, and each component in each stack, is represented by a corresponding node of the graph and dependency of each dataset on a stack, and between successive components in each stack, is represented by a directed edge between nodes of the graph, and for any edge in the system graph representing one of a predefined set of dependency types, to identify that edge as a priority edge;
memory (21) for storing the system graph and compliance scores (33) for respective nodes corresponding to system components, the compliance score for a node relating to the corresponding system component; and
compliance manager logic adapted, for each dataset, to calculate a stack-dependent compliance score (34) based on potential impact on data compliance as a function of the compliance scores for a set of nodes identified by traversing directed edges in the graph from the node corresponding to that dataset, and to identify the set of nodes by traversing (47) directed edges from the node corresponding to that dataset up to a predetermined maximum depth in the graph, subject to always traversing any priority edge between nodes corresponding to components in the at least one stack for that dataset; and to generate an alert if the stack-dependent compliance score for a dataset breaches a predetermined risk threshold for that dataset, wherein the compliance manager logic adapted, for each dataset, to calculate a stack-dependent compliance score, comprises:
logic for defining a weight for each edge of the graph in dependence on a type of dependency representeby that edge;
logic for, in calculating the stack-dependent compliance score (34) for each dataset, calculating (63) an impact score for each node in the set as a function of the compliance score for that node and the weight of the directed edge traversed to reach that node; and
logic for calculating (66) the stack-dependent compliance score for that dataset as a function of the impact scores for nodes in the set.

12. The computer system of claim 11, wherein the computer system is adapted, in response to an alert for a dataset, to initiate an action in the system to mitigate the compliance risk, wherein the action comprises at least one of: restricting access permissions in the system for the dataset; deleting the dataset; isolating a system component storing that dataset; and reconfiguring the at least one stack of system components for that dataset.

13. A computer program stored on a computer readable medium and loadable into the internal memory of a digital computer, comprising software code portions for performing, when said program is run on a computer, the method of any of claims 1 to 10.

## Patentansprüche

1. Computerrealisiertes Verfahren, aufweisend:
für jeden Datensatz in einem Datenverarbeitungssystem Identifizieren (40) von mindestens einem Stapel von hierarchisch abhängigen Systemkomponenten, von denen dieser Datensatz abhängig ist;
Erzeugen (41) eines Systemgraphen (32) mit Knoten, die durch gerichtete Kanten miteinander verbunden werden, wobei jeder Datensatz und jede Komponente in jedem Stapel durch einen entsprechenden Knoten des Graphen dargestellt werden und wobei eine Abhängigkeit eines jeden Datensatzes von einem Stapel und zwischen aufeinanderfolgenden Komponenten in jedem Stapel durch eine gerichtete Kante zwischen Knoten des Graphen dargestellt wird;
für jede Kante in dem Systemgraphen, die eine aus einem vordefinierten Satz von Abhängigkeitsarten darstellt, Identifizieren dieser Kante als eine Prioritätskante;
Speichern (42) von Compliance-Werten (33) für betreffende Knoten, die Systemkomponenten entsprechen, wobei sich der Compliance-Wert für einen Knoten auf die entsprechende Systemkomponente bezieht;
für jeden Datensatz Berechnen (43) eines stapelabhängigen Compliance-Werts (34) auf Grundlage einer möglichen Auswirkung auf eine Daten-Compliance als eine Funktion der Compliance-Werte für einen Satz von Knoten, die durch ein Durchlaufen gerichteter Kanten in dem Graphen von dem Knoten, der diesem Datensatz entspricht, erreicht werden, und Identifizieren des Satzes von Knoten durch ein Durchlaufen (47) gerichteter Kanten von dem Knoten, der diesem Datensatz entspricht, bis zu einer vorgegebenen maximalen Tiefe in dem Graphen, unter dem Vorbehalt, dass stets jede Prioritätskante zwischen Knoten, die Komponenten in dem mindestens einen Stapel für diesen Datensatz entsprechen, durchlaufen wird; und
Erzeugen (45) einer Warnmeldung, wenn der stapelabhängige Compliance-Wert für einen Datensatz einen vorgegebenen Risikoschwellenwert für diesen Datensatz verletzt, wobei der Schritt des Berechnens eines stapelabhängigen Compliance-Werts aufweist:
Definieren einer Gewichtung für jede Kante des Graphen abhängig von einer Art von Abhängigkeit, die durch diese Kante dargestellt wird; beim Berechnen (63) des stapelabhängigen Compliance-Werts (34) für jeden Datensatz eines Auswirkungswerts für jeden Knoten in dem Satz als eine Funktion des Compliance-Werts für diesen Knoten und der Gewichtung der gerichteten Kante, die durchlaufen wird, um diesen Knoten zu erreichen; und
Berechnen (66) des stapelabhängigen Compliance-Werts für diesen Datensatz als eine Funktion der Auswirkungswerte für Knoten in dem Satz.

2. Computerrealisiertes Verfahren nach Anspruch 1, wobei der stapelabhängige Compliance-Wert (34) für einen Datensatz als eine Funktion der Compliance-Werte für den Satz von Knoten und einen vordefinierten maximalen Compliance-Wert für den Datensatz berechnet wird.

3. Computerrealisiertes Verfahren nach Anspruch 1 oder 2, des Weiteren aufweisend:
als Reaktion auf eine Warnmeldung für einen Datensatz Einleiten einer Aktion in dem System, um das Compliance-Risiko zu mindern.

4. Computerrealisiertes Verfahren nach Anspruch 3, wobei die Aktion mindestens eines aufweist aus: einem Beschränken von Zugriffsberechtigungen in dem System für den Datensatz; einem Löschen des Datensatzes; einem Isolieren einer Systemkomponente, die diesen Datensatz speichert; und einem Neukonfigurieren des mindestens einen Stapels von Systemkomponenten für diesen Datensatz.

5. Computerrealisiertes Verfahren nach einem beliebigen vorangegangenen Anspruch, wobei der stapelabhängige Compliance-Wert (34) für jeden Datensatz eine monoton steigende Funktion des Compliance-Werts für jeden Knoten in dem Satz von Knoten für diesen Datensatz aufweist.

6. Computerrealisiertes Verfahren nach einem beliebigen vorangegangenen Anspruch, des Weiteren aufweisend:
Zugreifen auf mindestens ein Systeminventar, das in dem Datenverarbeitungssystem bereitgestellt wird, um System-Metadaten zu erhalten, die eine Konfiguration von Systemkomponenten angeben;
Zugreifen auf mindestens einen Datenkatalog, der in dem Datenverarbeitungssystem bereitgestellt wird, um Daten-Metadaten zu erhalten, die einen Speicherort und eine Verwendung eines jeden Datensatzes in dem System angeben; und
Identifizieren des mindestens einen Stapels von Systemkomponenten für jeden Datensatz aus den System-Metadaten und den Daten-Metadaten.

7. Computerrealisiertes Verfahren nach Anspruch 6, des Weiteren aufweisend:
Ermitteln des Risikoschwellenwerts für jeden Datensatz in Abhängigkeit von einer Datenklassifikation, die in den Daten-Metadaten enthalten ist.

8. Computerrealisiertes Verfahren nach einem beliebigen vorangegangenen Anspruch, des Weiteren aufweisend:
dynamisches Aktualisieren des Systemgraphen als Reaktion auf eine Erkennung von Ereignissen in dem System, wobei die Ereignisse eine Hinzufügung eines Datensatzes, eine Löschung eines Datensatzes, eine Änderung an dem mindestens einen Stapel von Systemkomponenten für einen Datensatz und eine Änderung des Compliance-Werts für einen Knoten des Graphen aufweisen; und
Berechnen eines neuen stapelabhängigen Compliance-Werts (34) für jeden Datensatz, der von einem der Ereignisse betroffen ist.

9. Computerrealisiertes Verfahren nach einem beliebigen vorangegangenen Anspruch, wobei die Systemkomponenten mindestens einen Teilsatz aufweisen aus:
Anwendungen; Diensten; Betriebssystemen; Plattformen; virtuellen Maschinen;
Hypervisoren; Containern; Speichersystemen; physischen Maschinen;
Netzwerkeinheiten; Netzwerken; Netzwerk-Clustern; Rechenzentren und Clustern von Rechenzentren.

10. Computerrealisiertes Verfahren nach einem beliebigen vorangegangenen Anspruch, des Weiteren aufweisend:
für jeden Knoten eines Teilsatzes von Knoten entsprechend den Systemkomponenten:
Berechnen eines stapelabhängigen Compliance-Werts (34) für diesen Knoten als eine Funktion des Compliance-Werts, der für diesen Knoten gespeichert wird, sowie der Compliance-Werte, die für einen Satz von Knoten gespeichert werden, die durch ein Durchlaufen gerichteter Kanten in dem Graphen von diesem Knoten erreicht werden; und
Erzeugen (71) einer Warnmeldung, wenn der stapelabhängige Compliance-Wert für eine Komponente einen vorgegebenen Risikoschwellenwert für diese Komponente verletzt.

11. Computersystem, aufweisend:
einen oder mehrere Computerprozessoren (2);
ein oder mehrere computerlesbare Speichermedien (3); und
auf dem einen oder den mehreren computerlesbaren Speichermedien gespeicherte Programmanweisungen zur Ausführung durch mindestens einen des einen oder der mehreren Computerprozessoren, wobei die Programmanweisungen aufweisen:
eine Systemanalysator(24)-Logik, die angepasst wird, um für jeden Datensatz in dem System mindestens einen Stapel von hierarchisch abhängigen Systemkomponenten zu identifizieren, von denen dieser Datensatz abhängig ist;
eine Graphenerzeuger(25)-Logik, die angepasst wird, um einen Systemgraphen (32) mit Knoten zu erzeugen, die durch gerichtete Kanten miteinander verbunden werden, wobei jeder Datensatz und jede Komponente in jedem Stapel durch einen entsprechenden Knoten des Graphen dargestellt wird und wobei eine Abhängigkeit eines jeden Datensatzes von einem Stapel und zwischen aufeinanderfolgenden Komponenten in jedem Stapel durch eine gerichtete Kante zwischen Knoten des Graphen dargestellt wird, und um für jede Kante in dem Systemgraphen, die eine aus einem vordefinierten Satz von Abhängigkeitsarten darstellt, diese Kante als eine Prioritätskante zu identifizieren;
einen Arbeitsspeicher (21) zum Speichern des Systemgraphen und der Compliance-Werte (33) für betreffende Knoten, die Systemkomponenten entsprechen, wobei sich der Compliance-Wert für einen Knoten auf die entsprechende Systemkomponente bezieht; und
eine Compliance-Verwalter-Logik, die angepasst wird, um für jeden Datensatz einen stapelabhängigen Compliance-Wert (34) auf Grundlage einer möglichen Auswirkung auf eine Daten-Compliance als eine Funktion der Compliance-Werte für einen Satz von Knoten zu berechnen, die durch ein Durchlaufen gerichteter Kanten in dem Graphen von dem Knoten, der diesem Datensatz entspricht, identifiziert werden, und um den Satz von Knoten durch ein Durchlaufen (47) gerichteter Kanten von dem Knoten, der diesem Datensatz entspricht, bis zu einer vorgegebenen maximalen Tiefe in dem Graphen zu identifizieren, unter dem Vorbehalt, dass stets jede Prioritätskante zwischen Knoten, die Komponenten in dem mindestens einen Stapel für diesen Datensatz entsprechen, durchlaufen wird; und um eine Warnmeldung zu erzeugen, wenn der stapelabhängige Compliance-Wert für einen Datensatz einen vorgegebenen Schwellenwert für diesen Datensatz verletzt, wobei die Compliance-Verwalter-Logik, die angepasst wird, um für jeden Datensatz einen stapelabhängigen Compliance-Wert zu berechnen, aufweist:
Logik zum Definieren einer Gewichtung für jede Kante des Graphen abhängig von einer Art von Abhängigkeit, die durch diese Kante dargestellt wird;
Logik zum, beim Berechnen des stapelabhängigen Compliance-Werts (34) für jeden Datensatz, Berechnen (63) eines Auswirkungswerts für jeden Knoten in dem Satz als eine Funktion des Compliance-Werts für diesen Knoten und der Gewichtung der gerichteten Kante, die zum Erreichen dieses Knotens durchlaufen wird; und
Logik zum Berechnen (66) des stapelabhängigen Compliance-Werts für diesen Datensatz als eine Funktion der Auswirkungswerte für Knoten in dem Satz.

12. Computersystem nach Anspruch 11, wobei das Computersystem angepasst wird, um als Reaktion auf eine Warnmeldung für einen Datensatz, eine Aktion in dem System einzuleiten, um das Compliance-Risiko zu mindern, wobei die Aktion mindestens eines aufweist aus: einem Beschränken von Zugriffsberechtigungen in dem System für den Datensatz; einem Löschen des Datensatzes; einem Isolieren einer Systemkomponente, die diesen Datensatz speichert; und einem Neukonfigurieren des mindestens einen Stapels von Systemkomponenten für diesen Datensatz.

13. Computerprogrammprodukt, das auf einem computerlesbaren Medium gespeichert wird und in den internen Arbeitsspeicher eines digitalen Computers ladbar ist, das Software-Codeabschnitte aufweist, um bei Ausführung des Programms auf einem Computer das Verfahren nach einem beliebigen der Ansprüche 1 bis 10 durchzuführen.

## Revendications

1. Procédé mis en œuvre par ordinateur comprenant :
pour chaque ensemble de données dans un système informatique, l'identification (40) d'au moins une pile de composants de système hiérarchiquement dépendants dont dépend cet ensemble de données ;
la génération (41) d'un graphe de système (32) ayant des nœuds interconnectés par des bords orientés, dans lequel chaque ensemble de données et chaque composant de chaque pile est représenté par un nœud correspondant du graphe et la dépendance de chaque ensemble de données vis-à-vis d'une pile ainsi qu'entre des composants successifs de chaque pile, est représentée par un bord orienté entre des nœuds du graphe ;
pour quelconque bord dans le graphe de système représentant un d'un ensemble prédéfini de types de dépendance, l'identification de ce bord comme un bord prioritaire ;
le mémorisation (42) de scores de conformité (33) pour les nœuds respectifs correspondant aux composants de système, le score de conformité d'un nœud se rapportant au composant de système correspondant ;
pour chaque ensemble de données, le calcul (43) d'un score de conformité (34) dépendant de la pile basé sur un impact potentiel sur la conformité des données en fonction des scores de conformité d'un ensemble de nœuds atteints en dépassant les bords orientés dans le graphe depuis le nœud correspondant à cet ensemble de données, et l'identification de l'ensemble de nœuds en dépassant (47) des bords orientés depuis le nœud correspondant à cet ensemble de données jusqu'à une profondeur maximale prédéterminée dans le graphe, sous réserve de toujours traverser quelconque bord prioritaire entre des nœuds correspondant à des composants dans l'au moins une pile pour cet ensemble de données ; et
la génération (45) d'une alerte si le score de conformité dépendant de la pile pour un ensemble de données dépasse un seuil de risque prédéterminé pour cet ensemble de données, dans lequel l'étape de calcul d'un score de conformité dépendant de la pile comprend :
la définition d'un poids pour chaque bord du graphe en dépendance d'un type de dépendance représenté par ce bord ;
lors du calcul du score de conformité (34) dépendant de la pile pour chaque ensemble de données, le calcul (63) d'un score d'impact pour chaque nœud de l'ensemble en fonction du score de conformité de ce nœud et le poids du bord orienté traversé pour atteindre ce nœud ; et
le calcul (66) du score de conformité dépendant de la pile pour cet ensemble de données en fonction des scores d'impact des nœuds de l'ensemble.

2. Procédé mis en œuvre par ordinateur selon la revendication 1, dans lequel le score de conformité (34) dépendant de la pile pour un ensemble de données est calculé en fonction des scores de conformité pour l'ensemble de nœuds et d'un score de conformité maximal prédéfini pour l'ensemble de données.

3. Procédé mis en œuvre par ordinateur selon la revendication 1 ou 2, comprenant en outre :
en réponse à une alerte concernant un ensemble de données, le déclenchement d'une action dans le système pour atténuer le risque de conformité.

4. Procédé mis en œuvre par ordinateur selon la revendication 3, dans lequel l'action comprend au moins une des opérations suivantes : la restriction des droits d'accès dans le système pour l'ensemble de données ; la suppression de l'ensemble de données ; l'isolation d'un composant de système mémorisant cet ensemble de données ; et la reconfiguration l'au moins une pile de composants de système pour cet ensemble de données.

5. Procédé mis en œuvre par ordinateur selon une quelconque des revendications précédentes, dans lequel le score de conformité (34) dépendant de la pile pour chaque ensemble de données comprend une fonction de croissance monotone du score de conformité pour chaque nœud dans l'ensemble de nœuds correspondant à cet ensemble de données.

6. Procédé mis en œuvre par ordinateur selon une quelconque des revendications précédentes, comprenant en outre :
l'accès à au moins un inventaire de système fourni dans le système informatique pour obtenir des métadonnées de système indiquant la configuration de composants de système ;
l'accès à au moins un catalogue de données fourni dans le système informatique pour obtenir des métadonnées de données indiquant l'emplacement et l'utilisation de chaque ensemble de données dans le système ; et
l'identification l'au moins une pile de composants de système pour chaque ensemble de données à partir des métadonnées de système et des métadonnées de données.

7. Procédé mis en œuvre par ordinateur selon la revendication 6, comprenant en outre :
l'inclusion de la détermination du seuil de risque pour chaque ensemble de données en dépendance d'une classification de données incluse dans les métadonnées des données.

8. Procédé mis en œuvre par ordinateur selon une quelconque des revendications précédentes, comprenant en outre :
la mise à jour dynamique du graphe de système en réponse à la détection d'événements dans le système, les événements comprenant l'ajout d'un ensemble de données, la suppression d'un ensemble de données, une modification à l'au moins une pile de composants de système pour un ensemble de données et une modification dans le score de conformité pour un nœud du graphe ; et
le calcul d'un nouveau score de conformité (34) dépendant de la pile pour chaque ensemble de données affecté par un des événements.

9. Procédé mis en œuvre par ordinateur selon une quelconque des revendications précédentes, dans lequel les composants de système comprennent au moins un sous-ensemble parmi : des applications ; des services ; des systèmes d'exploitation ; des plateformes ; des machines virtuelles ; des hyperviseurs ; des conteneurs ; des systèmes de mémorisation ; des machines physiques ; des dispositifs de réseau ; des réseaux ; des grappes de réseaux ; des centres de données et des grappes de centres de données.

10. Procédé mis en œuvre par ordinateur selon une quelconque des revendications précédentes, comprenant en outre : pour chaque nœud d'un sous-ensemble de nœuds correspondant à des composants de système :
le calcul d'un score de conformité (34) dépendant de la pile pour ce nœud, en fonction du score de conformité mémorisé pour ce nœud et des scores de conformité mémorisés pour un ensemble de nœuds atteints en dépassant des bords orientés dans le graphe à partir de ce nœud ; et
la génération (71) d'une alerte si le score de conformité dépendant de la pile pour un composant dépasse un seuil de risque prédéterminé pour ce composant.

11. Système informatique comprenant :
un ou plusieurs processeurs informatiques (2) ;
un ou plusieurs supports de mémorisation lisibles par ordinateur (3) ; et
des instructions de programme mémorisées sur l'un ou plusieurs supports de mémorisation lisibles par ordinateur pour être exécutées par au moins l'un d'un ou plusieurs processeurs informatiques, les instructions de programme comprenant :
une logique d'analyseur de système (24) adaptée, pour chaque ensemble de données dans le système, à identifier au moins une pile de composants de système hiérarchiquement dépendants dont dépend cet ensemble de données ;
une logique de générateur de graphe (25) adaptée pour générer un graphe de système (32) ayant des nœuds interconnectés par des bords orientés, dans lequel chaque ensemble de données et chaque composant dans chaque pile est représenté par un nœud correspondant du graphe et la dépendance de chaque ensemble de données vis-à-vis d'une pile, ainsi qu'entre des composants successifs dans chaque pile, est représentée par un bord orienté entre des nœuds du graphe et pour identifier, pour quelconque bord dans le graphe de système représentant un d'un ensemble prédéfini de types de dépendance, ce bord comme un bord prioritaire ;
une mémoire (21) pour mémoriser le graphe de système et des scores de conformité (33) pour les nœuds respectifs correspondant aux composants de système, le score de conformité d'un nœud se rapportant au composant de système correspondant ; et
une logique de gestionnaire de conformité adaptée, pour chaque ensemble de données, pour calculer un score de conformité (34) dépendant de la pile basé sur l'impact potentiel sur la conformité des données en fonction des scores de conformité d'un ensemble de nœuds identifiés en dépassant des bords orientés du graphe à partir du nœud correspondant à cet ensemble de données et pour identifier l'ensemble de nœuds en dépassant (47) des bords orientés depuis le nœud correspondant à cet ensemble de données jusqu'à une profondeur maximale prédéterminée dans le graphe, sous réserve de toujours dépasser quelconque bord prioritaire entre des nœuds correspondant à des composants dans l'au moins une pile pour cet ensemble de données ; et pour générer une alerte si le score de conformité dépendant de la pile pour un ensemble de données dépasse un seuil de risque prédéterminé pour cet ensemble de données, dans lequel la logique de gestionnaire de conformité adaptée, pour chaque ensemble de données, à calculer un score de conformité dépendant de la pile, comprend :
une logique pour définir un poids pour chaque bord du graphe en dépendance d'un type de dépendance représenté par ce bord ;
une logique pour, lors du calcul du score de conformité (34) dépendant de la pile pour chaque ensemble de données, le calcul (63) d'un score d'impact pour chaque nœud dans l'ensemble en fonction du score de conformité de ce nœud et du poids du bord orienté dépassé pour atteindre ce nœud ; et
une logique pour calculer (66) le score de conformité dépendant de la pile pour cet ensemble de données en fonction des scores d'impact des nœuds dans l'ensemble.

12. Système informatique selon la revendication 11, dans lequel le système informatique est adapté, en réponse à une alerte concernant un ensemble de données, pour déclencher une action dans le système afin d'atténuer le risque de non-conformité, dans lequel l'action comprend au moins une des opérations suivantes : restreindre les droits d'accès dans le système pour l'ensemble de données ; supprimer l'ensemble de données ; isoler un composant de système mémorisant cet ensemble de données ; et reconfigurer au moins une pile de composants de système pour cet ensemble de données.

13. Programme d'ordinateur mémorisé sur un support lisible par ordinateur et
chargeable dans la mémoire interne d'un ordinateur numérique, comprenant des parties de code logiciel pour exécuter, lorsque ledit programme est exécuté sur un ordinateur, le procédé selon une quelconque des revendications 1 à 10.
